# FASCICULE DE BREVET EUROPEEN

(11) **EP 3 333 140 B1**
(45) Date de publication et mention de la délivrance du brevet: **14.08.2019**
(21) Numéro de dépôt: 17206039.4
(22) Date de dépôt: 07.12.2017
(51) Int. Cl.: C04B 35/486, A61C 13/00, C04B 35/488, C04B 35/624, C04B 35/626, C04B 35/63, C04B 35/632, C04B 35/634, C04B 35/64, G03F 7/00, G03F 7/004, B32B 18/00

(54) **COMPOSITION DE CÉRAMIQUE POUR STÉRÉOLITHOGRAPHIE**
KERAMISCHE ZUSAMMENSETZUNG FÜR DIE STEREOLITHOGRAPHIE
CERAMIC COMPOSITION FOR STEREOLITHOGRAPHY

(30) Priorité: 08.12.2016 FR 1662157
(43) Date de publication de la demande: 13.06.2018
(73) Titulaire: Commissariat à l'Energie Atomique et aux Energies Alternatives, 75015 Paris (FR)
(72) Inventeur: CAILLIET, Sophie, 38000 GRENOBLE (FR); ROUMANIE, Maryline, 38500 COUBLEVIE (FR)
(74) Mandataire: Nony

(56) Documents cités:
- WO-A1-2016/191162
- FR-A1- 2 835 827

## Description

La présente invention se rapporte au domaine de la fabrication de pièces céramiques, en particulier en céramiques composites, par une technique 3-D, notamment par stéréolithographie (prototypage rapide), et vise plus particulièrement à proposer un nouveau mélange céramique composite utile pour ce mode de fabrication.

Le procédé de stéréolithographie, plus connu sous le nom de SLA (StereoLithography Apparatus), utilise le principe de photopolymérisation pour fabriquer des modèles en résine acrylate ou époxy, de toutes tailles et de géométrie complexe, avec une grande précision. Cette technologie, appliquée à la fabrication d'objets en céramique, fait donc intervenir une résine photopolymérisable sous UV, chargée par une poudre céramique. Elle permet d'obtenir des pièces uniques et denses.

Plus précisément, la fabrication d'une pièce céramique par stéréolithographie (SLA) consiste à déposer sur un support une première couche mince d'une composition, liquide ou pâteuse, contenant, en mélange, une poudre céramique, une résine photopolymérisable, un photoinitiateur, un dispersant et des adjuvants éventuels, et à polymériser cette couche dans une ou des zones choisies par l'action d'un rayonnement approprié, généralement UV. Il est ensuite superposé à cette première couche, une seconde couche qui est traitée selon le même principe, et ses opérations sont répétées jusqu'à ce que l'ensemble des parties polymérisées constitue la pièce désirée à l'état cru. Ce procédé implique consécutivement une élimination des parties non polymérisées, puis du constituant organique de la pièce crue, notamment par décomposition thermique (déliantage), et enfin une étape de frittage de la pièce.

Les documents WO 00/42471, EP 1 472 081 et EP 2529702 proposent des procédés conformes à ce principe et considèrent, à titre de compositions de départ, des résines fortement chargées en matériau céramique (70 à 90% en poids). Chaque formulation est composée d'un unique matériau céramique, choisi notamment parmi la silice, la zircone yttriée (YSZ) (pour Yttrium Stabilized Zirconia), l'alumine, le carbure de silicium, l'hydroxyapatite, le nitrure de silicium et les silico-alumineux. La poudre de céramique considérée y est tout d'abord mélangée à un dispersant, puis incorporée dans une résine formée d'au moins un monomère, un oligomère ou un de leurs mélanges, et contenant des photoinitiateurs sensibles aux UV. Les monomères et oligomères considérés sont le plus souvent de type acrylates, uréthanes acrylates, polyétheracrylate à amine modifiée, époxyacrylate ou encore polyesteracrylate.

Des procédés de fabrication de céramiques composites, c'est-à-dire par mélange de deux poudres, ont déjà été considérés. Malheureusement, la dispersion de deux poudres est souvent délicate et leur répartition finale dans les matériaux composites n'est pas homogène. Il a également été considéré de formuler, au préalable, deux matériaux de céramique sous la forme de particules de type coeur/coquille ce qui revient à intégrer une seule poudre dans la résine. Malheureusement, cette alternative possède également des limitations. Tout d'abord, il n'est pas toujours facile d'enrober des particules submicrométriques ou micrométriques. Par ailleurs, certaines particules, au regard de leur nature chimique, à l'image en particulier des zircones stabilisées ou non, ne se prêtent pas à un tel traitement de surface. Enfin, la fraction ajoutée de la partie enrobée demeure limitée.

La présente invention a précisément pour objet de proposer un nouveau mode de préparation de céramiques, notamment composites, permettant d'accéder à des matériaux composites homogènes et qui s'avère aisé de mise en oeuvre et compatible avec une grande diversité de résines convenant à la technologie SLA.

Ainsi, la présente invention concerne, selon un premier de ses aspects, une composition utile pour la préparation d'un objet en céramique par une technologie stéréo lithographie (SLA), caractérisée en ce qu'elle comprend, outre une poudre céramique, dite premier matériau céramique, une résine photopolymérisable, un photoinitiateur et un dispersant, au moins une quantité efficace d'un sol ou gel d'au moins un précurseur d'une céramique, dit second matériau, identique ou différent du premier matériau céramique, de préférence différent du premier matériau céramique.

Plus précisément, l'invention découle de l'observation inattendue par les inventeurs que la présence à l'état sol-gel d'un précurseur de céramique dans un mélange conventionnel pour la réalisation d'un objet en céramique selon une technologie stéréolithographie, SLA, est avantageuse à plusieurs titres.

La mise en oeuvre de précurseurs à l'état sol-gel permet de disposer de particules dotées d'une taille avantageusement nanométrique et donc aisées à disperser au niveau de la résine. Notamment, au regard de sa formulation à l'état sol-gel, le second matériau peut se déposer sous la forme d'un enrobage en surface des particules du premier matériau céramique. Il en découle une répartition homogène des deux matériaux dans la résine lors de la fabrication de la pièce de céramique attendue. Cette forme fluidifiée du précurseur rend également possible l'introduction du premier matériau en plus grande quantité, pouvant atteindre jusqu'à au moins 50% du volume de la résine photopolymérisable.

Il est à noter que la publication W. Pabst et al. (référence 1 : Ceramics-Silikaty. 44 (2000) 41-47) propose une variante de fabrication de céramique mettant en oeuvre l'incorporation d'une poudre d'ATZ (Alumina Toughened Zirconia), à titre de charge solide, à un matériau sol ou gel d'ATZ de même composition à titre de liant liquide. Le liant liquide est composé à 80 % en poids de précurseurs de ZrO₂ et Y₂O₃ et 20 % en poids de poudre d'alumine. Toutefois, ce mélange y est homogénéisé par extrusion, puis recuit à haute température pour obtenir le composite. En conséquence, ce document ne considère aucunement la technologie stéréolithographie, et encore moins la mise en oeuvre d'une résine photopolymérisable.

Selon un autre de ses aspects, la présente invention concerne l'utilisation d'une composition selon l'invention pour la fabrication d'un objet en céramique selon une technique d'impression 3-D de type stéréolithographie.

Un tel objet peut notamment consister, selon la nature considérée pour le composite final en céramique, en un implant dédié à une application dans le domaine médical, et notamment dans le domaine dentaire, mais également pour l'élaboration d'antennes en microélectronique de même que des objets d'ornement, comme par exemple des bijoux.

### COMPOSITION SELON L'INVENTION

Comme il ressort de ce qui précède, une composition selon l'invention a pour caractéristique de mettre en oeuvre un précurseur de céramique, dit second matériau, sous la forme d'un sol-gel.

### a) Précurseur de céramique, dit second matériau, sous la forme d'un sol-gel

Au sens de l'invention, un précurseur de céramique désigne un unique type de précurseur ou un mélange de plusieurs types de précurseurs.

Plus particulièrement, les précurseurs considérés selon l'invention sont compatibles avec les résines susceptibles de leur être associées dans les compositions selon l'invention.

Comme précurseur de céramique convenant à l'invention peuvent notamment être cités les composés de la famille des alcoxydes métalliques, des sels métalliques, des matériaux sol-gel de type silanes.

Plus particulièrement, ces précurseurs sont choisis parmi les isopropoxydes, les butoxydes, les silanes, les nitrates, les sulfates, les acétylacétonates, les acétonates et leurs mélanges.

Il est aussi possible d'ajouter plusieurs matériaux sous forme de précurseurs dans une formulation de type SLA.

La préparation d'une solution sol-gel, comprenant ce ou ces précurseur(s), est réalisée par solubilisation de ceux-ci dans un milieu solvant liquide.

Ce milieu solvant liquide peut être composé d'un unique ou d'un mélange de solvants, notamment choisis parmi les cétones, les alcools, les solvants aromatiques, ou tout type de solvants compatible avec les résines utilisées dans les formulations SLA. Par exemple, il peut être figuré par de l'acétone ou encore un mélange de solvants éthanol/méthyléthylcétone (butan-2-one)

Ce ou ces précurseurs sont avantageusement formulés sous la forme d'un sol-gel avec une taille nanométrique.

En effet, l'utilisation de précurseurs céramiques à l'état de sol-gel permet avantageusement d'incorporer des matériaux qui seront, après recuit, de taille nanométrique. Cette spécificité permet de pallier les difficultés liées à la dispersion de ces particules à grande surface spécifique. Par ailleurs, lorsque le précurseur considéré dans le sol-gel est de même nature chimique que la poudre de céramique conjointement considérée, il est constaté un gain de densification significatif pour l'objet composite final comparativement à un objet élaboré avec les mêmes composants mais sans ce précurseur sous forme sol-gel.

La quantité en précurseur(s) présent(s) dans la solution sol-gel est notamment ajustée pour conférer à la pièce de matériau composite ciblée des propriétés spécifiques.

De préférence la quantité en précurseur varie de 0,1 à 50 % en volume de précurseur par rapport au volume total de sol-gel.

### b) Autres composants de la composition selon l'invention

Une composition selon l'invention contient également une poudre céramique.

Au sens de l'invention, « poudre céramique » désigne un unique type de poudre ou un mélange de plusieurs types de poudres céramiques.

La poudre céramique est avantageusement choisie dans le groupe des céramiques oxydes constituées par exemple de l'alumine, la zircone, l'hydroxyapatite, la silice et ses dérivés, les titanates de baryum, d'aluminium ou des céramiques non oxydes comme par exemple les carbures et les nitrures de silicium, de bore, le nitrure d'aluminium.

Selon une variante préférée, elle est choisie parmi l'alumine et la zircone et de préférence la zircone sous une forme stabilisée (Y, Ce, Mg, Ca...).

En particulier, une composition selon l'invention contient au moins à titre de premier matériau céramique, au moins une zircone stabilisée par de l'yttrium (YSZ) ou du cérium (Ce-TZP).

Dans le cadre de la présente invention, la poudre de céramique(s) peut être avantageusement associée à un ou plusieurs précurseurs de céramique dans un rapport volumique premier matériau céramique/second matériau pouvant varier de 1000 : 1 à 1 : 1. Si le second matériau est ajouté à plus de 50% en volume par rapport au volume total de matériau composite, il peut être plus avantageux de l'introduire sous forme de poudre. Le premier matériau, en quantité quant à lui inférieure à 50% en volume par rapport au volume total de matériau composite, peut être ajouté sous forme de précurseur s'il existe.

Selon une variante préférée, lesdits premier et second matériaux sont de nature chimique différente.

Selon une variante préférée, une composition selon l'invention contient au moins à titre de premier matériau, une zircone yttriée (YSZ) ou une zircone cériée (Ce-TZP) et à titre de second matériau, de l'isopropoxyde d'aluminium (C₉H₂₁O₃Al) sous la forme d'un sol-gel.

Avantageusement, une composition selon l'invention peut contenir de 30 à 40 % en volume de zircone yttriée par rapport au volume total de la composition pour de 5 à 15 % en volume d'isopropoxyde d'aluminium par rapport au volume total de la composition.

Une composition selon l'invention contient également une résine photopolymérisable.

Au sens de l'invention, « résine » désigne un unique type de résine ou un mélange de plusieurs types de résine.

Avantageusement, il s'agit d'une résine liquide.

Une composition selon l'invention peut comprendre de 45 à 65 % en volume de résine(s) par rapport à son volume total.

A titre illustratif des résines convenant à l'invention peuvent notamment être citées les monomères et oligomères de type acrylates, uréthanes acrylates, polyéther acrylates, polyéther acrylates à amine modifiée, époxy acrylates ou encore polyesteracrylates.

Avantageusement, il s'agit d'une résine acrylate notamment choisie parmi les polyéther acrylates à amine modifiée, les acrylates di-fonctionnels ou hautement fonctionnels.

En particulier, il s'agit d'un mélange de polyéther acrylate à amine modifiée et d'hexane-1,6-diol diacrylate (HDDA), notamment commercialisé sous les dénominations respectives CN550® et HDDA® par les sociétés Arkema-Sartomer et Sigma-Aldrich.

L'initiation de la polymérisation des acrylates est obtenue par l'absorption de lumière ultraviolette par des substances génératrices de radicaux libres. Les amorceurs des acrylates sont de type radicalaire et leur choix est guidé principalement par la longueur d'onde de la source lumineuse qu'ils doivent absorber.

Leur sélection relève clairement des compétences de l'homme du métier de même que l'ajustement de leur quantité.

Il est rappelé que la gamme UV va d'une longueur d'onde de 100nm à 450nm. Les UVC permettent de réticuler des matériaux en surface, les UVB pénètrent dans la couche et les UVA compris entre 400 et 315nm permettent de réticuler une couche épaisse, en particulier d'épaisseur comprise entre 20 µm et 20 mm.

Dans le cadre de l'invention, la source lumineuse a avantageusement une longueur d'onde fixée à 365nm.

Des photoinitiateurs convenant pour les résines de type acrylate sont la 2-Benzyl-2-(diméthylamino)-4'-morpholinobutyrophénone (par exemple, Irgacure 369 de CIBA), la 2,2'-diméthoxy-2-phénylacétophénone (par exemple, l'Irgacure 651 de CIBA), le Phenylbis(2,4,6-triméthylbenzoyl)phosphine oxide (par exemple, Irgacure 819 de CIBA), la 2-Méthyl-4'-(méthylthio)-2-morpholinopropiophénone (par exemple, Irgacure 907 de CIBA) et le 2-hydroxy-2-méthyl-1-phényl-propane-1-one (par exemple, Darocure 1173 de CIBA).

Une composition selon l'invention possède avantageusement une texture de nature pâteuse.

Au sens de l'invention « nature pâteuse » entend signifier que la composition selon l'invention est déformable mécaniquement mais avantageusement dénuée d'une aptitude à s'écouler sous son propre poids.

Cette qualité peut notamment être caractérisée par une viscosité variant de 5 à 30 Pa.s à 100s⁻¹ et en particulier mesurée à l'aide d'un rhéomètre MCR 300 d'Anton-Paar avec une géométrie plan-plan équipée d'un plan fixe et d'un plan amovible de diamètre 50 mm. L'écart entre les deux plans, appelé entrefer, est fixé à 100 µm.

Dans un premier temps, l'échantillon est déposé sur le plan fixe, le plan amovible est alors descendu afin d'atteindre l'entrefer choisi et les débordements sont éliminés afin d'obtenir un alignement adéquat du plan et de l'échantillon. La procédure utilisée est composée de quatre étapes, deux paliers et deux rampes. Pour commencer, un premier palier à 2 s⁻¹ est effectué durant 3 minutes afin de stabiliser le mouvement, puis la première rampe linéaire est effectuée, elle permet de passer de 2 s⁻¹ à 150 s⁻¹ en 10 minutes. Un palier est alors effectué à 150 s⁻¹ pendant 3 minutes avec une série de 30 mesures. Ce palier permet ensuite de calculer des valeurs moyennes pour la viscosité et la contrainte de cisaillement en fonction du taux de cisaillement moyen. Pour finir, une dernière rampe linéaire, cette fois-ci en descente, est effectuée pour revenir à un taux de cisaillement de 0 s⁻¹. La température du plan fixe est maintenue à 25°C durant toute la durée des mesures, à l'aide d'une circulation d'eau au sein d'un bain thermostaté. Les deux paramètres mesurés sont la contrainte de cisaillement τ et la viscosité η. Les valeurs obtenues sont reportées en fonction des taux de cisaillement y appliqués afin d'établir les rhéogrammes et les courbes d'écoulement.

Selon un mode de réalisation préféré, une composition de l'invention comprend au moins de :
- 15 à 45 % en volume, de préférence de 30 à 40 % en volume et mieux de 30 à 34 % en volume de poudre de céramique, dit premier matériau, par rapport au volume total de la composition,
- 40 à 80 % en volume et de préférence de 45 à 65 % en volume de résine par rapport au volume total de la composition, et
- 5 à 20 % en volume, de préférence, de 5 à 15 % en volume et mieux de 7 à 14 % en volume par rapport au volume total de la composition, de précurseur(s) céramique dit de préférence second matériau, avantageusement différent du premier matériau, sous la forme d'un sol-gel de préférence ayant une concentration de 1 à 45 % en volume de précurseur par rapport au volume total de sol-gel.

Selon une variante préférée, le second matériau est un précurseur d'alumine, de préférence l'isopropoxyde d'aluminium (C₉H₂₁O₃Al) et le premier matériau est une zircone et de préférence une zircone stabilisée par de l'yttrium ou du cérium.

De préférence ces deux matériaux sont mis en oeuvre avec une résine de type acrylate.

Bien entendu, la composition selon l'invention peut comprendre des adjuvants tel que par exemple un dispersant. Ces adjuvants peuvent être présents dans la composition en une teneur allant de 0,5 à 10% en poids par rapport au poids de la céramique. Le dispersant utilisé doit être compatible avec la résine photopolymérisable, dans laquelle il peut être dissout, et être efficace avec la poudre céramique à disperser. Les esters phosphoriques, les polyacrylates d'ammonium, les polyacrylates de sodium, s'avèrent avantageux à ce titre.

### APPLICATIONS D'UNE COMPOSITION SELON L'INVENTION.

Comme précisé ci-dessus, une composition selon l'invention est particulièrement avantageuse pour former des objets en céramique, notamment en céramique composite selon une technique de stéréolithographie, SLA, qui utilise comme source lumineuse un laser ou un DLP.

Cette composition est généralement élaborée au préalable comme suit :
Il est préparé un mélange de la formulation sol-gel de précurseur céramique, de la poudre de céramique et également de la résine complémentée en photoinitiateur.

Ce mélange de ces trois composants est avantageusement réalisé dans des conditions permettant de s'affranchir d'une mise en contact de la résine avec le milieu solvant de la formulation sol-gel lorsque ce milieu solvant est susceptible d'être non inerte à l'égard de ladite résine.

Dans tous les cas, le mélange final est homogénéisé, notamment à l'aide d'un tricylindre, avant d'être mis en oeuvre pour la réalisation de l'objet considéré.

Comme énoncé précédemment, une composition selon l'invention se révèle tout particulièrement appropriée à une mise en forme selon une technique d'impression 3D, notamment selon un procédé DLP.

Le procédé DLP (Digital Light Processing) est une technique d'insolation utilisée en impression 3D qui utilise un projecteur homonyme pour fixer les photopolymères. Ce procédé se différencie des autres procédés de SLA par l'utilisation, dans la gamme UV, d'une LED (Light-Emitting diode) à la place d'un rayon laser. Dans le cas d'un procédé DLP il est possible d'insoler une surface, contrairement au laser qui balaye la surface à insoler.

Ainsi une composition selon l'invention s'avère tout particulièrement avantageuse pour accéder à des objets, homogènes et denses, formés en céramique composite et obtenus selon une impression 3D par stéréolithographie.

Un tel procédé de fabrication peut notamment comprendre au moins les étapes consistant à
a) déposer une couche de composition en surface d'un support,
b) exposer cette couche à un rayonnement thermique et/ou UV, dans des conditions propices à la polymérisation de la résine photopolymérisable de ladite composition,
c) le cas échéant, reproduire une à plusieurs fois des étapes a) et b) sur la couche polymérisée obtenue à l'issue d'une étape b) et
d) procéder au déliantage et au frittage de l'objet céramique formé à l'issu de l'étape b) ou c) si existante.

La réalisation de l'ensemble de ces étapes relève clairement des compétences de l'homme de l'art.

Le dépôt de couche(s) en stéréolithographie peut être réalisé par différentes techniques : bain, jet d'encre ou encore pulvérisation d'une composition. Selon l'invention, le dépôt de couche(s) est classiquement réalisé par râclage d'une composition selon l'invention sur la surface de l'objet.

L'épaisseur d'une couche varie généralement de 20 à 100 micromètres.

Avantageusement, le frittage est réalisé entre 1300 et 1700°C, de préférence entre 1350 et 1650°C et sous air.

Les objets obtenus à partir d'une composition selon l'invention s'avèrent être de composition homogène, denses et dotés de surfaces lisses

La composition selon l'invention est tout particulièrement intéressante pour fabriquer des objets, notamment dédiés à un usage à titre d'implants dans le domaine médical. Il peut notamment s'agir d'objets en céramique dédiés à remplacer des parties osseuses, ou des dents, chez un patient.

Toutefois, elle peut également convenir à l'élaboration d'articles bien différents comme des électrodes ou antennes en microélectronique ou encore des objets d'ornement, comme par exemple des bijoux.

Les exemples et figure qui suivent sont présentés à titre illustratif et non limitatif du domaine de l'invention.

### FIGURES

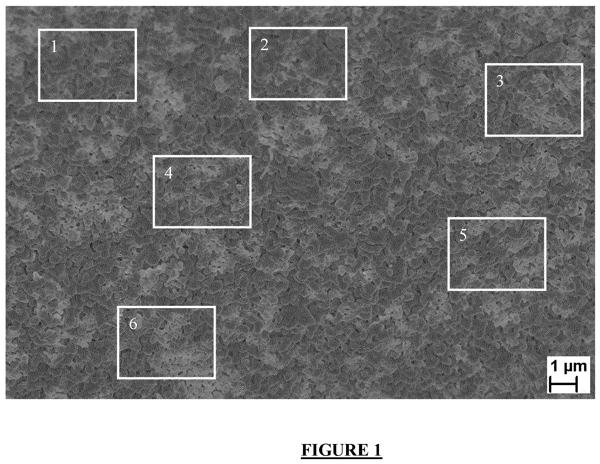

La Figure 1 est une image MEB Léo 1530 Gemini de chez Zeiss (puissance d'accélération de 5kV, distance de travail de 5mm et grossissement de 16000) de la microstructure de la pièce de composite formée à partir de la composition de l'exemple 2.

### EXEMPLE 1 :

### Préparation d'une composition selon l'invention

Elle possède la composition présentée au tableau 1 suivant :

**Tableau 1**

| **COMPOSE** | **QUANTITE** |
|---|---|
| Résine composée d'un mélange de polyetherdiacrylate à amine modifiée et d'hexane-1,6-diol diacrylate (HDDA) dans un rapport 80/20 en volume | 55 % vol de la composition |
| Photoinitiateur (PI) sensible aux UV à 365nm (Irgacure 651) | 0,7 wt% de la résine |
| Zircone Yttriée (Tosoh) | 31,5 % vol de la composition |
| Précurseur céramique : Isopropoxyde d'aluminium (C₉H₂₁O₃Al) (Sigma-Aldrich) | 13,5 % vol de la composition |

Elle est préparée comme suit :
8,1 g d'oligomère et 1,9 g de monomère sont mélangés avec 0,07 g de photoinitiateur. L'ensemble est dégazé sur des rouleaux.

36 g de poudre d'isopropoxyde d'aluminium sont dissous dans de l'acétone et la formulation sol ainsi formée est incorporée dans le mélange précédent.

La préparation ainsi formée est laissée à l'air à des fins d'évaporation de l'acétone.

En parallèle, 32 g de poudre de zircone Yttriée sont dispersées avec 0,32g de Disperbyk 111 de la société BYK qui est un mélange de Polyester d'acide phosphorique (60 à 100 % en poids) et d'acide phosphorique (1 à 5 % en poids). Le disperbyk 111 est ajouté à hauteur de 1 % en poids par rapport à la poudre.

Cette dispersion de poudre de YSZ est ensuite ajoutée à la préparation résine + PI + précurseur obtenue après évaporation de l'acétone. Ce mélange est homogénéisé à l'aide d'un tricylindre EXAKT 50.

### EXEMPLE 2 :

### Préparation d'une composition selon l'invention

Elle possède la composition présentée au tableau 2 suivant :

**Tableau 2**

| **COMPOSE** | **QUANTITE** |
|---|---|
| Résine composée d'un mélange de polyetherdiacrylate à amine modifiée et d'hexane-1,6-diol diacrylate (HDDA) dans un rapport 80/20 en volume | 55 % vol de la composition |
| Photoinitiateur (PI) sensible aux UV à 365nm (Irgacure 651) | 0,7 wt% de la résine |
| Zircone Yttriée (Tosoh) | 37,8 % vol de la composition |
| Précurseur céramique : Isopropoxyde d'aluminium (C₉H₂₁O₃Al) (Sigma-Aldrich) | 7,2 % vol de la composition |

Elle est préparée comme suit :
8,1 g d'oligomère et 1,9 g de monomère sont mélangés avec 0,07 g de photoinitiateur. L'ensemble est dégazé sur des rouleaux.

19 g de poudre d'isopropoxyde d'aluminium sont dissous dans de l'acétone et la formulation sol ainsi formée est incorporée dans le mélange précédent.

La préparation ainsi formée est laissée à l'air à des fins d'évaporation de l'acétone.

En parallèle, 38 g de poudre de zircone Yttriée sont dispersées avec 0,38g de Disperbyk 111 de la société BYK qui est un mélange de Polyester d'acide phosphorique (60 à 100 % en poids) et d'acide phosphorique (1 à 5 % en poids). Le disperbyk 111 est ajouté à hauteur de 1 % en poids par rapport à la poudre.

Cette dispersion de poudre de YSZ est ensuite ajoutée à la préparation résine + PI + précurseur obtenue après évaporation de l'acétone. Ce mélange est homogénéisé à l'aide d'un tricylindre EXAKT 50.

### EXEMPLE 3 :

### Mise en oeuvre d'un matériau composite selon l'invention

20 couches de 50µm du matériau préparé en exemple 2 sont insolées selon la technologie Digital Light Processing, qui peut se traduire par traitement numérique de la lumière, et qui consiste en la projection d'images reposant sur l'utilisation d'une puce contenant des miroirs orientables.

Cette technologie permet d'insoler une image entière.

L'échantillon ainsi réalisé est ensuite nettoyé à l'isopropanol, puis délianté et fritté sous air en un cycle de traitement thermique dans un four Nabertherm. Tout d'abord la montée en température s'effectue à une vitesse de 0,2°C/min jusqu'à 600°C, avec un palier de 1h à cette température pour le déliantage. Ensuite, la montée s'effectue de 600°C à 1350°C à une vitesse de 5°C/min avec un palier de 1h à 1350°C.

### Caractérisation physico-chimique de la pièce ainsi réalisée.

La Figure 1 est une image MEB de la microstructure de la pièce de composite formée selon l'exemple 3. Les inventeurs ont constaté une homogénéisation de la composition au niveau de l'intégralité de la pièce.

Les teneurs en Al, O et Zr représentatives du matériau de départ zircone yttriée, ont en outre été caractérisées au niveau des six zones distinctes de l'échantillon, représentées en figure 1, par analyse EDX avec un MEB Léo 1530 Gemini de chez Zeiss. La tension d'accélération est fixée à 15kV et la distance de travail est de 10 mm.

Le tableau 3 ci-après rend compte des résultats obtenus (exprimés en pourcentage massique de chaque élément par rapport à la masse totale).

**Tableau 3**

| Elément | O | Al | Zr |
|---|---|---|---|
| Zone 1 | 32,26 | 11,52 | 56,22 |
| Zone 2 | 34,18 | 8,55 | 57,26 |
| Zone 3 | 35,25 | 9,53 | 55,21 |
| Zone 4 | 27,09 | 9,73 | 63,18 |
| Zone 5 | 31,63 | 11,44 | 56,93 |
| Zone 6 | 36,95 | 10,24 | 52,81 |
| Moyenne | 32,89 | 10,17 | 56,93 |

Tout d'abord, cette analyse démontre la possibilité de réaliser un composite à partir d'un précurseur céramique et d'une poudre. Par ailleurs, la présence de carbone n'est pas caractérisée au niveau de la pièce finale.

### EXEMPLE 4 :

### Mise en oeuvre d'un matériau composite selon l'invention

10 couches de 100µm du matériau préparé en exemple 2 sont insolées selon la technologie Digital Light Processing telle que décrite en exemple 3.

L'échantillon ainsi réalisé est ensuite nettoyé à l'isopropanol, puis délianté et fritté sous air en un cycle de traitement thermique dans un four Nabertherm. Tout d'abord la montée en température s'effectue à une vitesse de 0,2°C/min jusqu'à 600°C, avec un palier de 1h à cette température pour le déliantage. Ensuite, la montée s'effectue de 600°C à 1350°C à une vitesse de 5°C/min avec un palier de 1h à 1350°C.

## Revendications

1. Composition utile pour la préparation d'un objet en céramique par une technologie stéréolithographie, SLA, **caractérisée en ce qu'**elle comprend, outre une poudre céramique, dite premier matériau céramique, une résine photopolymérisable, un photoinitiateur et un dispersant, au moins une quantité efficace d'un sol ou gel d'au moins un précurseur d'une céramique, dit second matériau, de préférence distinct du premier matériau céramique.

2. Composition selon la revendication précédente ayant une viscosité d'au moins 5 à 30 Pa.s à 100s⁻¹.

3. Composition selon l'une quelconque des revendications précédentes, dans laquelle ledit second matériau est choisi parmi les composés de la famille des alcoxydes métalliques, des sels métalliques et des matériaux sol gel de type silanes.

4. Composition selon l'une quelconque des revendications précédentes, dans laquelle ledit premier matériau céramique est choisi dans le groupe des céramiques oxydes, et est en particulier choisi parmi l'alumine, la zircone, l'hydroxyapatite, la silice et ses dérivées, les titanates de baryum, d'aluminium ou les céramiques non oxydes, en particulier parmi les carbures et les nitrures de silicium, de bore et le nitrure d'aluminium.

5. Composition selon l'une quelconque des revendications précédentes, dans laquelle ledit premier matériau céramique est une poudre de zircone stabilisée par de l'yttrium ou du cérium.

6. Composition selon l'une quelconque des revendications précédentes, dans laquelle lesdits premier et second matériaux sont de nature chimique différente.

7. Composition selon l'une quelconque des revendications précédentes, dans laquelle lesdits premier et second matériaux sont mis en oeuvre dans un rapport volumique compris entre 1000 : 1 et 1 : 1.

8. Composition selon l'une quelconque des revendications précédentes, comprenant de 45 à 65% en volume de résine photopolymérisable par rapport à son volume total.

9. Composition selon l'une quelconque des revendications précédentes, dans laquelle la résine est choisie parmi les monomères et oligomères de type acrylates, uréthanes acrylates, polyetheracrylate à amine modifiée, époxyacrylate ou encore polyesteracrylate et leurs mélanges.

10. Composition selon l'une quelconque des revendications précédentes, comprenant, à titre de résine photopolymérisable, une résine acrylate.

11. Composition selon l'une quelconque des revendications précédentes, comprenant de :
- 15 à 45 % en volume, de préférence de 30 à 40 % en volume et de préférence de 30 à 34 % en volume de poudre de céramique, dit premier matériau par rapport au volume total de la composition,
- 40 à 80 % en volume, et de préférence de 45 à 65 % en volume, de résine photopolymérisable, par rapport au volume total de la composition, et
- 5 à 20 % en volume, de préférence de 5 à 15 % en volume et de préférence de 7 à 14 % en volume, par rapport au volume total de la composition, de précurseur(s) céramique dit second matériau, avantageusement différent du premier matériau, sous la forme d'un sol-gel, de préférence ayant une concentration de 1 à 45 % en volume de précurseur par rapport au volume total de sol-gel.

12. Composition selon la revendication précédente, dans laquelle le second matériau est un précurseur d'alumine, de préférence l'isopropoxyde d'aluminium (C₉H₂₁O₃Al) et le premier matériau est une zircone et de préférence une zircone stabilisée par de l'yttrium ou du cérium.

13. Utilisation d'une composition selon l'une quelconque des revendications précédentes pour la fabrication d'objets en céramique par stéréolithographie.

14. Utilisation selon la revendication précédente dans laquelle lesdits objets sont des implants pour le domaine médical et en particulier pour le domaine dentaire.

## Patentansprüche

1. Zusammensetzung, welche für die Herstellung eines Gegenstands aus Keramik mittels einer Stereolithographietechnologie, SLA, geeignet ist, **dadurch gekennzeichnet, dass** sie neben einem keramischen Pulver, "erstes keramisches Material" genannt, einem photopolymerisierbaren Harz, einem Photoinitiator und einem Dispergiermittel wenigstens eine wirksame Menge eines Soles oder Gels wenigstens eines Vorläufers einer Keramik, "zweites Material" genannt, umfasst, der vorzugsweise von dem ersten keramischen Material verschieden ist.

2. Zusammensetzung nach dem vorhergehenden Anspruch, welche eine Viskosität von wenigstens 5 bis 30 Pa.s bei 100 s⁻¹ aufweist.

3. Zusammensetzung nach einem der vorhergehenden Ansprüche, wobei das zweite Material aus den Verbindungen der Familie der metallischen Alkoxide, der metallischen Salze und der Sol-Gel-Materialien vom Silantyp gewählt ist.

4. Zusammensetzung nach einem der vorhergehenden Ansprüche, wobei das erste keramische Material aus der Gruppe der Oxidkeramiken gewählt ist und insbesondere aus Aluminiumoxid, Zirkonoxid, Hydroxylapatit, Siliciumdioxid und seinen Derivaten, Barium- und Aluminiumtitanat gewählt ist, oder aus den Nichtoxidkeramiken, insbesondere aus den Carbiden und den Nitriden vom Silicium und Bor sowie Aluminiumnitrid.

5. Zusammensetzung nach einem der vorhergehenden Ansprüche, wobei das erste keramische Material ein Pulver von Yttrium- oder Cer-stabilsiertem Zirkonoxid ist.

6. Zusammensetzung nach einem der vorhergehenden Ansprüche, wobei das erste und das zweite Material von unterschiedlicher chemischer Natur sind.

7. Zusammensetzung nach einem der vorhergehenden Ansprüche, wobei das erste und das zweite Material in einem Volumenverhältnis zwischen 1000 : 1 und 1 : 1 eingesetzt werden.

8. Zusammensetzung nach einem der vorhergehenden Ansprüche, welche, bezogen auf ihr Gesamtvolumen, 45 bis 65 Vol.-% photopolymerisierbares Harz umfasst.

9. Zusammensetzung nach einem der vorhergehenden Ansprüche, wobei das Harz aus den Monomeren und Oligomeren vom Typ von Acrylaten, Urethanacrylaten, aminmodifiziertem Polyetheracrylat, Epoxyacrylat oder auch Polyesteracrylat und ihren Mischungen gewählt ist.

10. Zusammensetzung nach einem der vorhergehenden Ansprüche, welche als photopolymerisierbares Harz ein Acrylatharz umfasst.

11. Zusammensetzung nach einem der vorhergehenden Ansprüche, welche umfasst:
- 15 bis 45 Vol.-%, vorzugsweise 30 bis 40 Vol.-% und vorzugsweise 30 bis 34 Vol.-% Keramikpulver, "erstes Material" genannt, bezogen auf das Gesamtvolumen der Zusammensetzung,
- 40 bis 80 Vol.-%, vorzugsweise 45 bis 65 Vol.-% photopolymerisierbares Harz, bezogen auf das Gesamtvolumen der Zusammensetzung, und
- 5 bis 20 Vol.-%, vorzugsweise 5 bis 15 Vol.-% und vorzugsweise 7 bis 14 Vol.-%, bezogen auf das Gesamtvolumen der Zusammensetzung, eines Keramik-Vorläufers (von Keramik-Vorläufern), "zweites Material" genannt, das vorzugsweise vom ersten Material verschieden ist, in der Form eines Sol-Gels, vorzugsweise mit einer Konzentration des Vorläufers von 1 bis 45 Vol.-%, bezogen auf das Gesamtvolumen des Sol-Gels.

12. Zusammensetzung nach dem vorhergehenden Anspruch, wobei das zweite Material ein Vorläufer von Aluminiumoxid ist, vorzugsweise Aluminiumisopropoxid (C₉H₂₁O₃Al), und das erste Material ein Zirkonoxid und vorzugsweise ein Yttrium- oder Cer-stabilsiertes Zirkonoxid ist.

13. Verwendung einer Zusammensetzung nach einem der vorhergehenden Ansprüche für die Herstellung von Gegenständen aus Keramik durch Stereolithographie.

14. Verwendung nach dem vorhergehenden Anspruch, wobei die Gegenstände Implantate für den medizinischen Bereich und insbesondere für den Dentalbereich sind.

## Claims

1. Composition of use for the preparation of a ceramic object by a stereolithography SLA technology, **characterized in that** it comprises, besides a ceramic powder, said first ceramic material, a photopolymerizable resin, a photoinitiator and a dispersant, at least an effective amount of a sol or gel of at least one precursor of a ceramic, said second material, preferably distinct from the first ceramic material.

2. Composition according to the preceding claim having a viscosity of at least 5 to 30 Pa.s at 100 s⁻¹.

3. Composition according to either one of the preceding claims, in which the said second material is chosen from the compounds of the family of the metal alkoxides, of the metal salts and of the sol-gel materials of silane type.

4. Composition according to any one of the preceding claims, in which the said first ceramic material is chosen from the group of the oxide ceramics, and is in particular chosen from alumina, zirconia, hydroxyapatite, silica and its derivatives, or barium or aluminium titanates, or of the non-oxide ceramics, in particular from silicon or boron carbides and nitrides and aluminium nitride.

5. Composition according to any one of the preceding claims, in which the said first ceramic material is a powder of zirconia stabilized by yttrium or cerium.

6. Composition according to any one of the preceding claims, in which the said first and second materials are different in chemical nature.

7. Composition according to any one of the preceding claims, in which the said first and second materials are employed in a ratio by volume of between 1000:1 and 1:1.

8. Composition according to any one of the preceding claims, comprising from 45% to 65% by volume of photopolymerizable resin, with respect to its total volume.

9. Composition according to any one of the preceding claims, in which the resin is chosen from monomers and oligomers of the type of acrylates, urethane acrylates, amine modified polyether acrylates, epoxy acrylates or also polyester acrylates and their mixtures.

10. Composition according to any one of the preceding claims, comprising, as photopolymerizable resin, an acrylate resin.

11. Composition according to any one of the preceding claims, comprising from:
- 15% to 45% by volume, preferably from 30% to 40% by volume and preferably from 30% to 34% by volume of ceramic powder, said first material, with respect to the total volume of the composition,
- 40% to 80% by volume and preferably from 45% to 65% by volume of photopolymerizable resin, with respect to the total volume of the composition, and
- 5% to 20% by volume, preferably from 5% to 15% by volume and preferably from 7% to 14% by volume, with respect to the total volume of the composition, of ceramic precursor(s), said second material, advantageously different from the first material, in the form of a sol-gel, preferably having a concentration of 1% to 45% by volume of precursor, with respect to the total sol-gel volume.

12. Composition according to the preceding claim, in which the second material is an alumina precursor, preferably aluminium isopropoxide (C₉H₂₁O₃Al), and the first material is a zirconia and preferably a zirconia stabilized by yttrium or cerium.

13. Use of a composition according to any one of the preceding claims in the manufacture of ceramic objects by stereolithography.

14. Use according to the preceding claim, in which the said objects are implants for the medical field and in particular for the dental field.
